(19) **Europäisches Patentamt**
**European Patent Office**
**Office européen des brevets**

(11) **EP 2 641 951 B1**

(12) **EUROPEAN PATENT SPECIFICATION**

(45) Date of publication and mention
of the grant of the patent:
**28.12.2016 Bulletin 2016/52**

(51) Int Cl.:
*C09J 123/02* *(2006.01)*    *C09J 123/22* *(2006.01)*

(21) Application number: **13159917.7**

(22) Date of filing: **19.03.2013**

(54) **Surface protection sheet**

Oberflächenschutzfolie

Feuille de protection de surface

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.03.2012 JP 2012062193**

(43) Date of publication of application:
**25.09.2013 Bulletin 2013/39**

(73) Proprietor: **NITTO DENKO CORPORATION**
**Ibaraki-shi, Osaka 567-8680 (JP)**

(72) Inventors:
• **Igarashi, Takeshi**
**Ibaraki-shi, Osaka 567-8680 (JP)**
• **Suzuki, Toshitaka**
**Ibaraki-shi, Osaka 567-8680 (JP)**

(74) Representative: **Grünecker Patent- und Rechtsanwälte**
**PartG mbB**
**Leopoldstraße 4**
**80802 München (DE)**

(56) References cited:
**US-A1- 2009 149 567**

• **DATABASE WPI Week 200752 Thomson Scientific, London, GB; AN 2007-534265 XP002698355, & WO 2007/063812 A1 (KANEKA CORP) 7 June 2007 (2007-06-07)**
• **DATABASE WPI Week 200853 Thomson Scientific, London, GB; AN 2008-J27345 XP002698354, & WO 2008/087720 A1 (NICHIBAN KK) 24 July 2008 (2008-07-24)**

**Description**

CROSS-REFERENCE

The present application claims priority based on Japanese Patent Application No. 2012-062193 filed on March 19th, 2012, and the entire contents thereof are incorporated herein by reference.

BACKGROUND OF THE INVENTION

1. Field of the Invention

The present invention relates to a surface protection sheet for protecting the surface of an adherend from damages such as scratches, dirt deposits, and so on.

2. Description of the Related Art

During processing or transporting metal plates, painted steel plates, or synthetic resin plates, etc., as a known means to prevent their surfaces from receiving damages (scratches, dirt deposits, etc.), protection sheets are adhered to the surfaces. A surface protection sheet used for such a purpose is generally constructed to comprise a pressure-sensitive adhesive (PSA) layer on one face of a resin substrate sheet (support substrate) so that it can serve the protective purpose when adhered via the PSA layer to an adherend (an article to be protected). For example, for constituting a PSA layer in a surface protection sheet used on paint finishes of automobiles, use of a polyisobutylene-based PSA is known (Japanese Patent No. 2832565). Technical literatures relating to a protection sheet using a block copolymer-based PSA include Japanese Patent Application Publication No. 2007-238746 and Japanese Patent No. 3887402. Japanese Patent No. 3471122 relates to a PSA formulation for medical use.

SUMMARY OF THE INVENTION

In dynamic viscoelastic measurements, a polyisobutylene-based PSA shows a wide rubbery plateau region in the storage modulus when measured as the temperature is varied, and also exhibits poor elasticity. Thus, with a surface protection sheet using a polyisobutylene-based PSA, the adhesive behavior may exhibit little temperature dependence (e.g., influences by differences in the surrounding temperature or thermal history are suppressed, producing stable adhesive properties) and excellent workability when removing from an adherend surface. Hence, it is useful to provide a means to prevent a surface protection sheet comprising a polyisobutylene-based PSA from giving rise to an adhesive transfer, which is an event where some PSA residue remains on the adherend surface after the sheet is removed.
The present invention was made in view of such circumstances, and a main objective thereof is to provide a surface protection sheet that comprises a polyisobutylene-based PSA and can be removed after use with less adhesive transfers to an adherend surface.
The present invention provides a surface protection sheet comprising a support substrate and a PSA layer provided thereon. The PSA constituting the PSA layer comprises a polyisobutylene as defined in claim 1 as a base polymer The PSA further comprises a styrenelisobutylene block copolymer. Herein, the styrene/isobutylene block copolymer refers to a block copolymer comprising at least one styrene block (or referred to as "St block" hereinafter) and at least one isobutylene block (or referred to as "IB block" hereinafter). The styrenelisobutylene block copolymer (or referred to as "StIIB block copolymer" hereinafter) content in the PSA is more than zero part by mass, but less than 70 parts by mass relative to 100 parts by mass of the polyisobutylene.
According to a surface protection sheet having such a constitution, because a suitable amount of a St1IB block copolymer is added to the PSA, the adhesive transfer resistance of the protection sheet can be increased (i.e., the sheet becomes less likely to result in adhesive transfers). In addition, since the PSA uses a polyisobutylene as its base polymer, it is able to bring out the characteristics of polyisobutylene such as low temperature-dependence of the adhesion behaviors. A polyisobutylene-based PSA typically comprises no crosslinks and is less likely to build up an internal strain in the PSA itself. Thus, with the protection sheet using a polyisobutylene as a base polymer, it may be less likely that the surface of an adherend is exposed to stress due to the strain of the PSA.
As the StIIB block copolymer, can be preferably used a material primarily comprising a triblock copolymer having a St-IB-St structure. A St/IB block copolymer primarily comprising the triblock copolymer and further comprising a diblock copolymer having a St IB structure as a secondary component can also be used.
The PSA in the surface protection sheet disclosed herein preferably satisfies the next inequality: A/B < 1.3 where A is the room temperature storage modulus measured at a frequency of 10 Hz and a temperature of 23 °C, and B is the high temperature storage modulus measured at a frequency of 10 Hz and a temperature of 70 °C. A surface protection sheet comprising such a PSA layer may stably produce desirable adhesive properties in a broad temperature range because the temperature-dependence of the storage modulus is low. In a preferable embodiment, the room temperature storage modulus, A, is $4.5 \times 10^5$ Pa or lower. Such a PSA constituting a PSA layer of a surface protection sheet is even less likely to build up an internal strain. Thus, according to such an embodiment, the amount of stress exerted on an adherend surface may be further reduced.

In a preferable embodiment of the art disclosed herein, the polyisobutylene has a weight average molecular weight (Mw) in a range from $30 \times 10^4$ to $150 \times 10^4$. Such an embodiment allows the polyisobutylene used as the base polymer to more readily produce advantageous effects.

In another preferable embodiment of the art disclosed herein, the St/IB block copolymer has a weight average molecular weight in a range from $3 \times 10^4$ to $20 \times 10^4$. According to such an embodiment, the adhesive transfer resistance of the protection sheet can be effectively increased, and the decreases in the other properties due to the addition of the St/IB block copolymer can be better suppressed.

BRIEF DESCRIPTION OF THE DRAWINGS

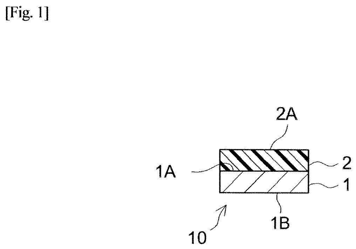

Fig. 1 shows a cross-sectional view schematically illustrating an embodiment of the surface protection sheet according to the present invention.

DETAILED DESCRIPTION OF THE INVENTION

Preferred embodiments of the present invention are described below. Matters necessary to practice this invention other than those specifically referred to in this description may be understood as design matters based on the conventional art in the pertinent field for a person of ordinary skill in the art. The present invention can be practiced based on the contents disclosed in this description and common technical knowledge in the subject field.

The surface protection sheet according to the present invention comprises a support substrate sheet and a PSA layer provided thereon (typically, on one face of the support substrate). Fig. 1 shows the cross-sectional structure of a surface protection sheet according to an embodiment of the present invention. Surface protection sheet 10 has a constitution such that PSA layer 2 is provided on first face 1A of support substrate 1, and is used such that surface 2A of PSA layer 2 is adhered to an adherend (an article to be protected). Prior to use (i.e., before adhered to an adherend), protection sheet 10 may be in an embodiment such that surface 2A (adhesive face, i.e., the surface to be adhered to an adherend) of PSA layer 2 is protected with a release liner (not shown in the drawing) comprising a release face at least on the PSA-layer side. Alternatively, with second face (back face) 1 B of substrate 1 being a release face, protection sheet 10 may be in an embodiment such that protection sheet 10 is wound in a roll whereby second face 1B contacts PSA layer 2 and protects surface 2A.

<Support substrate>

The art disclosed herein can be applied preferably to a surface protection sheet using as its support substrate a resin sheet primarily comprising a resin component (typically, a resin film formed of a composition primarily comprising a resin component) such as polyolefin, polyester (e.g., polyethylene terephthalate (PET)), or the like. The resin sheet is typically a non-porous resin film. The "non-porous resin film" referred to herein should be conceptually distinguished from the so-called non-woven fabric (i.e., meaning to exclude non-woven fabrics). An especially preferable application may be a surface protection sheet wherein the primary component among resin components constituting the support substrate is a polyolefin-based resin (i.e., the support substrate is a polyolefin-based resin sheet). A support substrate having such a composition is preferable from the standpoint of the recyclability and so on. For example, can be preferably used a polyolefin-based resin sheet of which 50 % by mass or more is a polyethylene (PE) resin or a polypropylene (PP) resin (in other words, the total amount of PE and PP resins combined accounts for 50 % by mass or more of the entire support substrate).

As the polyolefin-based resin sheet (film), can be preferably used a resin sheet (a PP resin sheet) wherein the resin constituting the sheet primarily comprises a PP resin (in other words, the resin comprises a PP resin at a ratio higher than 50 % by mass). For instance, in a preferable resin sheet, the resin comprises a PP resin at a ratio of about 60 % by mass or higher (more preferably about 70 % by mass or higher). From the standpoint of the heat resistance etc., can be preferably used a resin sheet comprising a continuous phase (continuous constitution) of a PP resin. In the resin sheet, the resin may be formed essentially of one, two or more species of PP resin (i.e., the resin consists of PP resins).

The support substrate may have a single-layer structure, or a layered structure with two or more layers. When it has a layered structure, it is preferable that at least one layer comprises a continuous PP resin phase. The remainder of the resin can be a polyolefin-based resin (PE resin, etc.) primarily comprising an olefin-based polymer formed of ethylene or an α-olefin having four or more of carbon atoms as the primary monomer, or a resin other than a polyolefin-based resin. An example of a resin sheet that can be preferably used as a support substrate of the surface protection sheet disclosed herein is a polyolefin-based resin sheet of which the resin consists essentially of a PP resin and a PE resin (typically, a PP sheet wherein the primary component of the resin is a PP resin and the remainder is a PE resin).

The primary component of the PP resin can be a polymer (a propylene-based polymer) of various types that contains propylene as a constituent. It can be a PP resin consisting essentially of one, two or more species of propylene-based polymer. The concept of the propylene-based polymer referred to herein include, for instance, the following polypropylenes:

Propylene homopolymers (homopolypropylenes) such as isotactic polypropylenes.

Random copolymers (random polypropylenes) of propylene and other α-olefin(s) (typically, one, two or more species selected from ethylene and α-olefins having 4 to 10 carbon atoms); preferably random polypropylenes constituted with propylene as the primary monomer (a main monomer, i.e., a component accounting for 50 % by mass or more of all monomers); for instance, a random polypropylene obtained by random copolymerization of 96 to 99.9 mol% of propylene and 0.1 to 4 mol% of another α-olefin (preferably ethylene and/or butene).

Block copolymers (block polypropylenes) comprising a copolymer (preferably a copolymer wherein the primary monomer is propylene) obtained by block copolymerization of propylene and other α-olefin(s) (typically, one, two or more species selected from ethylene and α-olefins having 4 to 10 carbon atoms), and typically, further comprising as a by-product of the block copolymerization a rubber formed of at least either one of propylene and the other α-olefin; for instance, a block polypropylene comprising a polymer obtained by block copolymerization of 90 to 99.9 mol% of propylene and 0.1 to 10 mol% of other α-olefin(s) (preferably ethylene and/or butene), and further comprising as a by-product a rubber formed of at least either one of propylene and the other α-olefin.

The PP resin can be formed essentially of one, two or more species of such propylene-based polymer, or can be a thermoplastic olefin resin (TPO) or a thermoplastic elastomer (TPE) of a reactor blend type obtainable by copolymerizing a propylene-based polymer with a large amount of a rubber component, or of a dry blend type obtainable by mechanically dispersing the rubber component in a propylene-based polymer. Alternatively, it can be a PP resin comprising a copolymer of propylene and other monomer(s) (functional monomer) containing other functional group(s) in addition to a polymerizing functional group, a PP resin obtained by copolymerizing such a functional monomer with a propylene-based polymer, or the like.

The primary component of the PE resin can be a polymer (an ethylene-based polymer) of various types that contains ethylene as a constituent It can be a PE resin consisting essentially of one, two or more species of ethylene-based polymer. The ethylene-based polymer can be an ethylene homopolymer or a product of copolymerization (random copolymerization, block copolymerization, etc.) of ethylene as the primary monomer and other α-olefin(s). Preferable examples of the α-olefin include α-olefins having 3 to 10 carbon atoms such as propylene, 1-butene (which can be a branched 1-butene), 1-hexene, 4-methyl-1-pentene, 1-octane, and the like. It can be a PE resin comprising a copolymer of ethylene and a monomer (functional monomer) containing other functional group(s) in addition to a polymerizing functional group, a PE resin obtained by copolymerizing such a functional monomer with an ethylene-based polymer, or the like. Examples of a copolymer of ethylene and a functional monomer include ethylene-vinyl acetate copolymers (EVA), ethylene-acrylic acid copolymers (EAA), ethylene-methacrylic acid copolymers (EMAA), ethylene-methyl acrylate copolymers (EMA), ethylene-ethyl acrylate copolymers (EEA), ethylene-methyl methacrylate copolymers (EMMA), ethylene-(meth)acrylic acid (i.e., ethylene-acrylic acid, or ethylene-methacrylic acid) copolymers crosslinked by metal ions, and the like.

The density of the PE resin is not particularly limited, and it can be, for instance, about $0.9 \text{ g/cm}^3$ to $0.94 \text{ g/cm}^3$. Preferable PE resins include low-density polyethylene (LDPE) and linear low-density polyethylene (LLDPE). The PE resin may comprise one, two or more species of LDPE and one, two or more species of LLDPE. There are no particular limitations on the proportions of the respective LDPEs or LLDPEs, or the blend ratio of LDPE to LLDPE, and they can be suitably selected so as to obtain a PE resin that exhibits desirable properties.

Although not particularly limited, as the resin material constituting the support substrate, can be preferably used a resin material having a MFR (melt flow rate) of approximately 0.5 g/10min to 80 g/10min (e.g., 0.5 g/10min to 10 g/10min). Herein, the MFR refers to a value measured by method A at a temperature of 230 °C and an applied load of 21.18 N based on JIS K 7210. The resin material can be a polyolefin-based resin (e.g., a PP resin, a PE resin, a blend resin of a PP resin and a PE resin, or the like) having a MFR in the said range.

The resin sheet (preferably a polyolefin-based resin sheet) used as a substrate of the surface protection sheet disclosed herein may contain as necessary suitable components allowed for inclusion in the substrate in accordance with desired properties such as light-blocking ability, weatherability, heat resistance, consistent coating, adhesive properties, and so on. For example, it may suitably contain additives such as pigments (typically inorganic pigments), fillers, anti-oxidant, light-stabilizing agents (meaning to include radical scavengers, UV (ultraviolet ray) absorbers, etc.), slipping agent, antiblocking agent, and so on. Examples of materials that can be preferably used as pigments or fillers include inorganic powders such as titanium oxide, zinc oxide, calcium carbonate, and the like. The amount of an inorganic pigment or a filler can be suitably selected in consideration of the extent of the effects produced by the additive and the substrate moldability suitable for the method (casting, blow molding (inflation molding), etc.) employed for forming the resin sheet It is usually preferable that the amount of a pigment or a filler (when several species are added, their combined amount) is about 2 to 20 parts by mass (more preferably about 5 to 15 parts by mass) relative to 100 parts by mass of the resin. For example, each additive can be added in an amount that is normally employed in the field of resin sheets used as support substrates in surface protection sheets for similar purposes.

The resin sheet (preferably a polyolefin-based resin sheet) can be produced by employing a suitable film formation method heretofore known. For example, can be preferably employed a method that involves extrusion of a molding material containing the resin (preferably, a resin consisting of a PE resin or a resin comprising a PP resin as the primary component and a PE resin as a secondary component) and additives, etc., added as necessary.

In support substrate 1 (typically a resin sheet) shown in Fig. 1, face 1A to which PSA layer 2 is to be provided can be pre-subjected to a surface treatment such as an acid treatment, corona discharge treatment, UV irradiation, plasma treatment, or the like. According to support substrate 1 pre-subjected to such a surface treatment, can be obtained surface protection sheet 10 that exhibits even greater adhesive transfer resistance. Alternatively, can be used support substrate without any surface treatment. In surface protection sheet 10 using such support substrate 1, the effects by the constitution used by the present invention (i.e., the effects to increase the adhesive transfer resistance) can be more readily produced.

In support substrate 1, face (back face) 1B opposite to the face to which PSA layer 2 is to be provided can be pre-subjected as necessary to a release treatment (e.g., a treatment where a release agent based on silicone, a long-chain alkyl, or fluorine, etc., is applied to form a film having a thickness of typically about 0.01 $\mu$m to 1 $\mu$m (e.g., 0.01 $\mu$m to 0.1 $\mu$m)). Such a release treatment can produce effects such as easy unwinding of a rolled surface protection sheet 10, and so on.

The thickness of the support substrate is not particularly limited and can be suitably selected according to the intended purpose. Usually, it is suitable to use a substrate having a thickness of about 300 $\mu$m or smaller (e.g., about 10 $\mu$m to 200 $\mu$m). In a preferable embodiment of the surface protection sheet disclosed herein, the substrate has a thickness of about 10 $\mu$m to 100 $\mu$m (e.g., about 20 $\mu$m to 60 $\mu$m).

<Polyisobutylene>

The PSA layer included in the surface protection sheet disclosed herein is constituted with a PSA comprising a polyisobutylene as a base polymer. Herein, the "base polymer" in a PSA refers to a primary component (i.e., a component accounting for 50 % by mass or more) among all polymer components contained in the PSA. In a preferable embodiment, 70 % by mass or more of the polymer components contained in the PSA is a polyisobutylene.

In this description, "polyisobutylene" is not limited to an isobutylene homopolymer (homopolyisobutylene), and the term encompasses copolymers in which the primary monomer is isobutylene (in other words, isobutylene is copolymerized at a ratio larger than 50 mol%, or more preferably larger than 70 mol%). The copolymer can be a copolymer of isobutylene and normal butylene, a copolymer of isobutylene and isoprene (e.g., butyl rubbers such as regular butyl rubber, chlorinated butyl rubber, brominated butyl rubber, partially crosslinked butyl rubber, etc.), a vulcanizate or a modification product of these (e.g., a product obtained by modification with a functional group such as hydroxyl group, carboxyl group, amino group, epoxy group, etc.), or the like. From the standpoint of the stability of adhesive strength (e.g., an ability to suppress an excessive increase in the adhesive strength that is induced by aging or thermal history), preferable examples of a polyisobutylene that can be used include homopolyisobutylenes, copolymers of isobutylene and normal butylene (e.g., isobutylene-normal butylene copolymers in which the copolymerization ratio of isobutylene is smaller than 30 mol%). Among these, homopolyisobutylenes are preferable.

A polyisobutylene having a weight average molecular weight (Mw) of $10 \times 10^4$ to $150 \times 10^4$ is selected and used. Several polyisobutylenes having diffeent Mw values can be used together. The Mw of the entire polyisobutylene used as the base polymer is preferably in a range of about $20 \times 10^4$ to $150 \times 10^4$ (more preferably about $30 \times 10^4$ to $100 \times 10^4$).

The polyisobutylene can be partially or entirely an isobutylene-based polymer (a masticated product) obtained from a high molecular weight polyisobutylene via a mastication process to yield lower molecular weights (preferably to yield a weight average molecular weight in the preferable range described above). The mastication process can be preferably carried out so as to obtain a polyisobutylene having a Mw value equal to approximately 10 % to 80 % of the Mw value prior to the mastication process. It is also preferable to carry out the process so as to obtain a polyisobutylene having a number average molecular weight (Mn) of about $10 \times 10^4$ to $40 \times 10^4$. Such a mastication process can be performed based on the contents of Japanese Patent No. 3878700.

When either the Mw or the Mn is excessively larger than the range given above, it may result in too high a viscosity of the PSA solution, hindering the handling properties (e.g., coating consistency) of the PSA solution. When either the Mw or the Mn is excessively smaller than the range given above, it may result in an insufficient cohesive strength of the PSA, and when used under demanding conditions (e.g., when adhered to an adherend having minute scratches on the surface), it may be likely to produce adhesive transfers.

The Mw and Mn values herein refer to the values calibrated with polystyrene standard, which can be determined based on gel permeation chromatography (GPC). As a GPC system, can be used, for instance, model number "HLC-8120GPC" available from Tosoh Corporation.

<St/IB block copolymer>

The PSA in the art disclosed herein is characterized by comprising, in addition to a polyisobutylene as the base polymer, a styrene-isobutylene (St/IB) block copolymer as a polymer added to the polyisobutylene (this polymer may be referred to as an "additional polymer" hereinafter). The "StlIB block copolymer" herein refers to a block copolymer comprising at least one St block and at least one IB block. Typical examples of such a StlIB block copolymer include a St-IB structure (diblock copolymer), a St-IB-St structure (triblock copolymer), and the like. As a St/IB block copolymer having three or more blocks, a copolymer having St blocks on both terminals, respectively, can be preferably used. According to a St/IB block copolymer having such a structure, can be obtained a surface protection sheet combining higher levels of properties (e.g., low temperature-dependence of the storage modulus of polyisobutylene) and adhesive transfer resistance.

As the additional polymer included in the PSA in the art disclosed herein, can be used a single species of such St/IB block copolymer, or two or more species of St/IB block copolymer (e.g., St/IB block copolymers differing in one, two or more properties among the following: the numbers of St blocks and IB blocks, their positions, the molecular weights of the respective blocks, the molecular weight of the entire block copolymer, and so on) at a suitable ratio. In a preferable embodiment, a triblock copolymer having a St-IB-St structure accounts for 50 % by mass or more (typically 60 % by mass or more, e.g., 75 % by mass or more, or essentially 100 % by mass) of the total amount of the St/IB block copolymer used. According to such an embodiment, can be obtained a protection sheet wherein the adhesive transfer resistance is effectively increased while impact on other properties (e.g., the temperature-dependency of storage modulus) is limited by the addition of the St/IB block copolymer.

The St/IB block copolymer content can be greater than zero part by mass, but equal to or less than 70 parts by mass relative to 100 parts by mass of the polyisobutylene as the base polymer, or it is usually suitable to be 3 parts by mass or greater, but 60 parts by mass or less (e.g., 5 parts by mass or greater, but 50 parts by mass or less, preferably greater than 5 parts by mass, but 40 parts by mass or less). When the St/IB block copolymer content is too low, the effect to increase the adhesive transfer resistance may not be sufficiently produced. When the St/IB block copolymer content is too high, the temperature dependence of the storage modulus (and even that of adhesive properties such as the adhesive strength, etc.) may tend to turn out greater. In a preferable embodiment, the St/IB block copolymer content is 10 parts by mass or greater, but 40 parts by mass or less (more preferably 10 parts by mass or greater, but 30 parts by mass or less, e.g., 10 parts by mass or greater, but 25 parts by mass or less).

As the St/IB block copolymer in the art disclosed herein, can be preferably used a copolymer having a Mw of $1 \times 10^4$ or larger. When the Mw is too small, the effect to increase the adhesive transfer resistance tends to decline. It is usually preferable to use a St/IB block copolymer having a Mw of $3 \times 10^4$ or larger (e.g., $5 \times 10^4$ or larger). On the other hand, when the Mw of the St/IB block copolymer is too large, the temperature dependence of the storage modulus may become greater, or the miscibility to the polyisobutylene as the base polymer may tend to be insufficient. Thus, it is usually preferable to use a St/IB block having a Mw value of $30 \times 10^4$ or smaller (typically $20 \times 10^4$ or smaller, e.g., $15 \times 10^4$ or smaller). From the standpoint of the miscibility, can be preferably used a St-IB diblock copolymer or a St-IB-St triblock copolymer wherein the IB block has a Mw value of $2 \times 10^4$ or larger (typically $4 \times 10^4$ to $15 \times 10^4$). In a preferable embodiment, the Mw of the St/IB block is at most one third (e.g., one fifth or smaller than one fifth) the Mw of the polyisobutylene as the base polymer. According to such an embodiment, can be preferably obtained a protection sheet combining high levels of miscibility and adhesive properties. The Mw values of the St/IB block copolymer and other additional polymers refer to values (values calibrated with polystyrene standard) determined based on GPC measurements, similarly to the Mw measurement for the polyisobutylene.

In a preferable embodiment, as the St/IB block copolymer, is used a copolymer containing styrene at 5 % to 50 % (by mass ratio of the styrene residue contained in the entire St/IB block copolymer). For instance, can be preferably used a St/IB block copolymer having a 10 % to 35 % styrene content. When the styrene content is too low, the effect to increase the adhesive transfer resistance of the protection sheet tends to decline. On the other hand, when the styrene content is too high, the temperature dependence of the storage modulus may become greater, or the miscibility to the polyisobutylene as the base polymer may turn out insufficient. When using several different species of St/IB block copolymer with different styrene contents, it is preferable that their average styrene content is in the range given above.

In the art disclosed herein, the polyisobutylene and the St/IB block copolymer contained in the PSA are preferably selected so that they exhibit good miscibility to each other. This allows producing of a protection sheet having a better visual quality (e.g., having a highly transparent PSA layer). Also from the standpoint of preventing adhesive transfers to an adherend surface, it is advantageous that the polyisobutylene and the St/IB block copolymer are readily miscible to each other.

<Tackifier>

The PSA may comprise a tackifier as needed. Examples of a tackifier that can be used preferably include alkyl-phenol resins, terpene-phenol resins, epoxy-based resins, coumarone-indene resins, rosin-based resins, terpene-based resins, alkyd resins, petroleum resins, hydrogenated products of these, and the like. Among these tackifiers, one species can be used solely, or two or more species can be used together.

When the PSA comprises a tackifier, its amount can be, for instance, 50 parts by mass or smaller (preferably 30 parts by mass or smaller, or more preferably 15 parts by mass or smaller) relative to 100 parts by mass of the base polymer. It is usually suitable that its amount is 0.01 part by mass or larger. From the standpoint of preventing contamination on the adherend or adhesive transfers thereto, the amount of tackifier is preferably 0.01 to 5 parts by mass relative to 100 parts by mass of the base polymer, or more preferably 0.01 to 2 parts by mass (typically 0.05 to 1 part by mass, e.g., 0.1 to 1 part by mass).

The surface protection sheet disclosed herein can be practiced preferably in an embodiment where the PSA is essentially free of a tackifier (e.g., an embodiment where the amount of the tackifier added is less than 0.01 part by mass relative to 100 parts by mass of the base polymer). According to such an embodiment, adhesive transfers to an adherend surface can be more highly prevented.

To an extent that does not largely disturb the effects obtainable by the present invention, a PSA in the art disclosed herein may contain as an optional component other additional polymer(s) that is not a St/IB block copolymer. Examples of such an optional additional polymer that can be suitably employed include known polymers such as rubber-based polymers, acrylic polymers, polyesters, polyurethanes, polyethers, silicone-based polymers, polyamides, fluorine-based polymers, poly-$\alpha$-olefins, ethylenevinyl acetate copolymers, and the like. Examples of the rubber-based polymers include natural rubber, styrene-butadiene rubber (SBR); polyisoprene; ABA-type block copolymer rubbers and their hydrogenated products, for example, styrene-butadiene-styrene block copolymers (SBS), styreneisoprene-styrene block copolymers (SIS), styrene-(vinyl isoprene)-styrene block copolymers (SVIS), styrene-ethylene-butylene-styrene block copolymers (SEBS), styrene-ethylene-propylene-styrene block copolymers (SEPS); and the like. In usual, the amount of such an optional additional polymer (when two or more species of optional additional polymers are used, their combined amount) is suitably 30 parts by mass or less relative to 100 parts by mass of the polyisobutylene as the base polymer and preferably equal to or less than the amount of the St/IB block copolymer. Alternatively, the PSA may have a composition essentially free of such an optional additional polymer (e.g., a composition containing such an optional additional polymer in an amount less than 0.1 part by mass relative to 100 parts by mass of the base polymer).

The PSA used in the surface protection sheet disclosed herein may contain as necessary suitable components (additives) allowed for inclusion in the PSA. Examples of such additives include softeners, release agents, pigments, fillers, antioxidant, light-stabilizing agents (meaning to include radical scavengers, UV absorbers, etc.) and the like. Examples of softener include rubber-based materials having low molecular weights, process oils (typically paraffin-based oils), petroleum-based softeners, epoxy-based compounds, and the like. Examples of a release agent include silicone-based release agents, paraffin-based release agents, polyethylene wax, acrylic polymers and the like. When using a release agent, its amount can be, for instance, about 0.01 to 5 parts by mass relative to 100 parts by mass of the base polymer. Alternatively, the PSA may have a composition essentially free of such a release agent Examples of pigments and fillers include inorganic powders such as titanium oxide, zinc oxide, calcium oxide, magnesium oxide, silica and the like.

The surface protection sheet disclosed herein can be practiced preferably also in an embodiment where the PSA contains no light-stabilizing agents. Because the PSA comprises a polyisobutylene as its base polymer and further comprises a St/IB block copolymer, even in an embodiment with no light-stabilizing agents, the protection sheet may exhibit sufficient weatherability for practical use. Non-inclusion of light-stabilizing agents in the PSA is advantageous from the standpoint of increasing the adhesive transfer resistance, and it may also contribute to preventing contamination on an adherend surface. Such a PSA containing no light-stabilizing agents can be employed preferably, for instance, in an embodiment where the PSA is essentially free of a tackifier. It can be also employed preferably in an embodiment where the PSA is essentially free of optional additional polymers as described above.

Each of these additives can be used solely as a single species or in a combination of two or more species. Each additive can be used in an amount usually employed in the field of the PSA used for surface protection sheets. The total amount of the tackifier and other additives combined is preferably 30 parts by mass or less (more preferably 15 parts by mass or less) relative to 100 parts by mass of the base polymer.

The PSA layer can be formed according to a known method for forming a PSA layer in a PSA sheet For instance, can be preferably employed a method (direct method) where a PSA layer is formed by directly providing (typically applying) a fluid composition (a PSA solution) to a support substrate and drying the composition, with the fluid composition being a mixture obtained by dissolving or dispersing in a suitable solvent (toluene, heptane, hexane, ethyl acetate, etc.) a PSA-layer-forming material comprising a polyisobutylene and a St/IB block copolymer as well as additives, etc., added as necessary. Alternatively, can be employed a method (transfer method) where a PSA layer is transferred to a support substrate, with the PSA layer having being formed in advance on a highly releasable surface (e.g., a release liner surface, the back face of a support substrate that has been processed with a release treatment, etc.) by applying the PSA composition thereto and drying the composition. The PSA layer in the art disclosed herein typically has a continuous form, but it can have a regular or random pattern of dots, stripes, etc., depending on the purpose and use. As a solvent used in preparation of the PSA solution, can be preferably used a solvent that can dissolve both the polyisobutylene and the St/IB block copolymer. Toluene is a preferable example of such a solvent. The solids content (NV) in the PSA solution can be, for instance, 5 to 30 % by mass, or it is usually suitable to be 10 to 25 % by mass.

The thickness of the PSA layer is not particularly limited, and can be suitably selected according to the purpose. In usual, it is suitably about 100 μm or smaller (e.g., 2 μm to 100 μm), preferably about 3 μm to 30 μm, or more preferably about 5 μm to 20 μm.

With respect to the PSA in the art disclosed herein, the room temperature storage modulus A measured at a frequency of 10 Hz and a temperature of 23 °C and the high temperature storage modulus B measured at a frequency of 10 Hz and a temperature of 70 °C may satisfy the next inequality: A/B < 1.3. In general, since the storage modulus tends to decrease as the temperature increases, A/B is normally greater than or equal to one (A/B ≥ 1) (typically, A/B > 1). It indicates that the larger the value of A/B, the greater the temperature dependence of the storage modulus over the temperature range from 23 °C to 70 °C. A PSA having a A/B value smaller than 1.3 is preferable as it exhibits stable adhesive properties over a broad temperature range. For example, an adherend (e.g., a metal plate) having a surface protection sheet adhered thereon may have various temperatures depending on the subjected conditions of transport or storage, or due to the heat generated in a molding process, etc. In a PSA having a A/B value near 1 (e.g., smaller than 1.3, preferably 1.2 or smaller, more preferably 1.1 or smaller), temperature differences do not cause significant changes in the adhesive properties (e.g., adhesive strength). Thus, a surface protection sheet comprising the said PSA layer can provide suitable protection over a broad temperature range. The protection sheet can be properly removed as well over a broad temperature range.

The storage moduli A and B can be determined, for instance, as follows: On a typical rheometer (e.g., dynamic viscosity spectrometer under model name "ARES", available from Rheometrics Scientific, Inc.), a sample of 2 mm thickness is set in the parallel plates having a diameter of 8 mm, respectively, and subjected to measurements at the prescribed frequency. The temperature range for a measurement and the rate of temperature increase are not particularly limited and can be suitably selected according to the type of rheometer used. For example, the measurement can taken over a temperature range (e.g., from -50 °C to 120 °C) including at least the range from 20 °C to 70 °C (preferably from 0 °C to 80 °C). The rate of temperature increase can be about 1 °C/min to 10 °C/min (e.g., 5 °C/min).

In a preferable embodiment, the room temperature storage modulus of the PSA is preferably $4.5 \times 10^5$ Pa or lower, or more preferably $4.0 \times 10^5$ Pa or lower (typically lower than $4.0 \times 10^5$ Pa). According to a PSA exhibiting such a room temperature storage modulus, can be obtained a protection sheet that exerts reduced stress on an adherend surface. A preferable PSA usually exhibit a room temperature storage modulus A of $1.0 \times 10^5$ Pa or higher (e.g., $2.0 \times 10^5$ Pa or higher). The PSA has a high temperature storage modulus B of preferably $4.5 \times 10^5$ Pa or lower or more preferably $4.0 \times 10^5$ Pa or lower (typically lower than $4.0 \times 10^5$ Pa). A preferable PSA usually has a high temperature storage modulus B of $1.0 \times 10^5$ Pa or higher (e.g., $2.0 \times 10^5$ Pa or higher).

The PSA layer in the art disclosed herein is typically constituted with a non-crosslinked PSA. Herein, the PSA layer constituted with a non-crosslinked PSA refers to a PSA layer that has not been deliberately subjected to a process (a crosslinking process, e.g., addition of a crosslinking agent) to form chemical bonds among polymers contained in the PSA while the layer is being formed. Such a PSA layer have preferable properties for a PSA layer in a surface protection sheet because essentially no strain is stored internally (even if some strain is temporally built up, it can be readily diminished) and exerts little stress on an adherend surface.

In the adhesive strength test carried out under the conditions described later in the worked examples, it is preferable that the surface protection sheet disclosed herein has a 180° peel strength in a range of 3 N/25mm or higher, but 10 N/25mm or lower (preferably 5 N/25mm or higher, but 10 N/25mm or lower, e.g., 5 N/25mm or higher, but lower than 9 N/25mm) when measured at a peeling speed of 300 mm/min either after stored at 23 °C for 48 hours or after stored at 70 °C for 48 hours (preferably, in both conditions, in other words, after stored at 23 °C for 48 hours and also after stored at 70 °C for 48 hours). Also, in each case after being stored at 23 °C for 48 hours or at 70 °C for 48 hours, the 180° peel strength at a peeling speed of 30 m/min is preferably in the range from 3 N/25mm to 10 N/25mm (preferably 3 N/25mm or higher, but 9 N/25mm or smaller, e.g., 3.5 N/25mm or higher, but 7 N/25mm or lower). When the peel strength is too low, the protection sheet may spontaneously peel off from the adherend surface when subjected to external force, etc. When the peel strength (especially the peel strength at a peeling speed of 30 m/min) is too high, when the protection sheet is removed after use from the adherend (an article to be protected), the handling properties may tend to degrade.

An adherend having a surface protection sheet adhered thereon may have various temperatures depending on the subjected conditions of transport or storage, or due to the heat generated in a molding process, etc. Thus, after the surface protection sheet is adhered to an adherend, even if different thermal histories develop, it is preferable that removal of the surface protection sheet from the adherend does not require largely different forces. In a preferable embodiment, the surface protection sheet exhibits a 180° peel strength X (N/25mm) when measured at a peeling speed of 30 m/min after storage at 23 °C for 48 hours and a 180° peel strength Y (N/25mm) when measured at a peeling speed of 30 m/min after storage at 70 °C for 48 hours, with the value of the X/Y ratio being 1.5 or smaller (e.g., 0.7 or larger, but 1.5 or smaller), or more preferably 1.3 or smaller (e.g., 0.8 or larger, but 1.3 or smaller). In a surface protection sheet that exhibits such properties, the force required for removal from an adherend is less likely to be altered by a difference in the thermal history. Thus, it exhibits good workability for removal.

In practicing the present invention, although it is unnecessary to reveal why the objectives of the present application are accomplished by employing the constitution described above, it may be considered as follows: A PSA using a St/IB block copolymer as the base polymer exhibits a high cohesive strength, which can be advantageous in terms of the adhesive transfer resistance when compared to a PSA using a polyisobutylene as the base polymer. However, the peel strength is highly dependent on the temperature (as in Examples 15, 16 described later). On the contrary, use of a polyisobutylene as the base polymer combined with a St/IB block copolymer added as a secondary component is considered to greatly increase the adhesive transfer resistance while keeping the characteristics of the polyisobutylene, resulting in producing of a high-performance surface protection sheet.

EXAMPLES

Several worked examples relating to the present invention are described below, but the present invention is not intended to be limited to these examples. In the description below, "parts" and "%" are based on the mass unless otherwise specified.

<Example 1>

A substrate-molding material mixture containing 70 parts of a homopolypropylene (trade name "NOVATEC PP FY4" available from Japan Polypropylene Corporation), 20 parts of a LLDPE (trade name "KERNEL KF380" available from Japan Polyethylene Corporation) and 10 parts of rutile titanium(IV) oxide (trade name "TIPAQUE CR-95" available from Ishihara Sangyo Kaisha, Ltd.) was melted and compounded in a film-forming device, and the resultant was extruded from the T-die thereof to form a PP resin film (support substrate) of 40 $\mu$m thickness. To the back face (opposite to the face to be provided with a PSA layer) of this substrate, was applied a long-alkyl-based release agent to form a coating of about 0.05 $\mu$m thickness after dried (release treatment). The support substrate according to the present example was thus obtained.

100 parts of a polyisobutylene as a base polymer, 20 parts of a ST/IB block copolymer were mixed with toluene up to a combined amount of 15 % (i.e., 15 % NV) to prepare a PSA solution according to the present example. For the polyisobutylene, was used trade name "OPPANOL B-80" (or abbreviated to "B-80" hereinafter), Mw approximately 90 $\times$ $10^4$, Mn approximately 25 $\times$ $10^4$) available from BASF. For the St/IB block copolymer, was used trade name "SIBSTER 062T" (or abbreviated to "062T" hereinafter) available from Kaneka Corporation. 062T consists essentially of a triblock copolymer having a St-IB-St structure, and it has a Mw of about 6 $\times$ $10^4$ and a 23 % styrene content (based on the mass; the same applies hereinafter).

The PSA solution was applied to the front face (the face with no release treatment) of the support substrate to form a PSA layer of 10 $\mu$m thickness, and the resultant was wound up into a roll. A PSA sheet sample according to the present example was thus fabricated.

<Examples 2>

As a St/IB block copolymer, in place of 062T used in Example 1, was used trade name "SIBSTER 062M" (or abbreviated to "062M" hereinafter) available from Kaneka Corporation. 062M contains a St-IB-St triblock copolymer and a St-IB diblock copolymer at a mass ratio of 60:40, and it has a Mw value of about 5 $\times$ $10^4$ and a 23 % styrene content. Otherwise in the same manner as Example 1, a PSA sheet sample was fabricated.

<Example 3>

As a St/IB block copolymer, in place of 062T used in Example 1, was used trade name "SIBSTER 072T" (or abbreviated to "072T" hereinafter) available from Kaneka Corporation. 072T consists essentially of a St-IB-St triblock copolymer, and it has a Mw of about $6.5 \times 10^4$ and a 23 % styrene content. Otherwise in the same manner as Example 1, a PSA sheet sample was fabricated.

<Example 4>

As a St/IB block copolymer, in place of 062T used in Example 1, was used trade name "SIBSTER 073T" (or abbreviated to "073T" hereinafter) available from Kaneka Corporation. 073T consists essentially of a St-IB-St triblock copolymer, and it has a Mw of about $7 \times 10^4$ and a 30 % styrene content. Otherwise in the same manner as Example 1, a PSA sheet sample was fabricated.

<Example 5>

As a St/IB block copolymer, in place of 20 parts of 062T used in Example 1, was used 5 parts of trade name "SIBSTER 102T" (or abbreviated to "102T" hereinafter) available from Kaneka Corporation. 102T consists essentially of a St-IB-St triblock copolymer, and it has a Mw of about $10 \times 10^4$ and a 15 % styrene content. Otherwise in the same manner as Example 1, a PSA sheet sample was fabricated.

<Example 6 to Example 8>

The amount of 102T in Example 5 was changed to 10 parts (Example 6), 20 parts (Example 7) or 50 parts (Example 8) relative to 100 parts of the polyisobutylene. Otherwise in the same manner as Example 5, PSA solutions were prepared, respectively. Except that these PSA solutions were used, in the same manner as Example 1, PSA sheet samples were fabricated, respectively.

<Example 9>

Relative to 100 parts of the polyisobutylene in Example 7, was added 20 parts of a low molecular weight polyisobutylene (or abbreviated to "low-Mw PIB" hereinafter) available from BASF under trade name "OPPANOL B-12SFN" (Mw approximately $7 \times 10^4$, Mn approximately $2.6 \times 10^4$). Otherwise in the same manner as Example 7, a PSA solution was prepared. Except that this PSA solution was used, in the same manner as Example 1, a PSA sheet sample was fabricated.

<Example 10>

As a St/IB block copolymer, in place of 20 parts of 062T used in Example 1, was used 10 parts of trade name "SIBSTER 103T" (or abbreviated to "103T" hereinafter) available from Kaneka Corporation. 103T consists essentially of a St-IB-St triblock copolymer, and it has a Mw of about $10 \times 10^4$ and a 30 % styrene content Otherwise in the same manner as Example 1, a PSA sheet sample was fabricated.

<Example 11>

The amount of 103T added relative to 100 parts of the polyisobutylene in Example 10 was changed to 20 parts. Otherwise in the same manner as Example 10, a PSA solution was prepared. Except that this PSA solution was used, in the same manner as Example 1, a PSA sheet sample was fabricated.

<Example 12> (comparative)

In the present example, in place of the StIIB block copolymer used in Example 1, was used a non-crystalline polypropylene under trade name "TAFTHREN H5002" (Mw $20 \times 10^4$) available from Sumitomo Chemical Co., Ltd. Otherwise in the same manner as Example 1, a PSA sheet sample was fabricated.

<Example 13> (comparative)

In the present example, in place of the StIIB block copolymer used in Example 1, was used trade name DYNAR-ON 8600P " (Mw $9 \times 10^4$, 15 % styrene content) available from Sumitomo Chemical Co., Ltd. Otherwise in the same manner as Example 1, a PSA sheet sample was fabricated.

<Example 14> (comparative)

In the present example, no St/IB block copolymer was used, and the polyisobutylene was used solely as the polymer component Otherwise in the same manner as Example I, a PSA sheet sample was fabricated.

<Example 15> (comparative)

In place of the polyisobutylene in Example 14, 062M (StIIB block copolymer) was used. Otherwise in the same manner as Example 14, a PSA solution was prepared. Except that this PSA solution was used, in the same manner as Example 1, a PSA sheet sample was fabricated.

<Example 16> (comparative)

In place of the polyisobutylene in Example 14,102T (St/IB block copolymer) was used. Otherwise in the same manner as Example 14, a PSA solution was prepared. Except that this PSA solution was used, in the same manner as Example 1, a PSA sheet sample was fabricated.

The PSA sheet samples fabricated in Examples 1 to 16 were subjected to the evaluation tests described below. The results are shown along with the PSA compositions of the respective examples in Tables 1 and 2.

[Measurement of storage modulus G']

The same materials used for preparation of each PSA solution (excluding toluene) were mixed in a twin screw mixer, and the mixture was molded into a film of 2 mm thickness. From this, a measurement sample was stamped out to suit parallel plates of 8 mm diameter, and the sample was set on a dynamic viscosity spectrometer (model name "ARES", available from Rheometrics Scientific, Inc.). Based on JIS K 7244-1, while applying a shear strain at a frequency of 10 Hz, the temperature was increased from -50 °C to 120 °C at a rate of 5 °C/min. From the resulting data, were determined the storage modulus A at 23 °C and the storage modulus B at 70 °C.

[Adhesive strength (peel strength)]

The adhesive strength was measured based on JIS Z 0237(2000): The PSA sheet sample according to each example was cut to a 25 mm wide strip to prepare a test piece. In a standard environment at 23 °C and 50 % RH, a SUS430BA plate as an adherend was degreased with petroleum benzine, and the test piece was adhered thereto. The adhesion was carried out by pressure-boding the test piece by rolling over back and forth once at a rate of 3 m/min with a 2 kg rubber roller specified in JIS Z 0237:2000. The test piece was stored under the standard environment for 48 hours. Subsequently, in the same standard environment, using a tensile tester, the peel strength (N/25mm) was measured at a peel angle of 180° for two standard peeling speeds (clock head speeds) of 300 mm/min and 30 m/min, respectively.

Another test piece adhered similarly on a SUS430BA plate was stored in a dry oven at 70 °C for 48 hours. The test piece was then removed from the oven and left in the standard environment for over 2 hours. Following this, in a standard environment, the 180° peel strength (N/25mm) was measured in the same manners for two standard peeling speeds of 300 mm/min and 30 m/min.

For each sample, three measurements were taken under the respective conditions. Tables 1 and 2 show their arithmetic mean values.

[Adhesive transfer resistance]

The PSA sheet sample according to each example was cut into a 50 mm wide strip to prepare a test piece. The test piece was pressure-bonded to a SUS430 plate (No. 4 finish) as an adherend, and the resultant was stored in an environment at 70 °C for 2 days. Subsequently, in the same environment, the test piece was hand-peeled from the adherend by a test operator at a peel angle of approximately 90° and a peeling speed of about 10 m/min. The exposed adherend surface was visually inspected, and the proportion of the area where transferred PSA was present after the peeling relative to the total area of the adherend that had been covered with the PSA sheet was calculated. Based on the results, the adhesive transfer resistance was evaluated into the following grades:

E (excellent): no adhesive transfers were observed (excellent adhesive transfer resistance).
G (good): the area with transferred PSA was smaller than 5 % (good adhesive transfer resistance).
P (poor): the area with transferred PSA was 5 % or larger (poor adhesive transfer resistance).

[Miscibility]

The PSA solution prepared in each example was applied to and dried on a transparent PET film to form a PSA film of about 1 mm thickness. The PSA film was visually inspected, and the miscibility was evaluated into the following grades:

G (good): the PSA film is transparent (good miscibility).
P (poor): the PSA film is turbid (poor miscibility).

[Table 1]

Table 1

| | | | Ex. 1 | Ex. 2 | Ex. 3 | Ex. 4 | Ex. 5 | Ex.6 | Ex. 7 | Ex. 8 | Ex. 9 | Ex. 10 | Ex. 11 |
|---|---|---|---|---|---|---|---|---|---|---|---|---|---|
| PSA composition (parts by mass) | Polyisobutylene | | 100 | 100 | 100 | 100 | 100 | 100 | 100 | 100 | 100 | 100 | 100 |
| | Additional polymer | | 20 | 20 | 20 | 20 | 5 | 10 | 20 | 50 | 20 | 10 | 20 |
| | Low-Mw PIB | | - | - | - | - | - | - | - | - | 20 | - | - |
| Additional polymer | St/IB block copolymer | | 062T | 062M | 072T | 073T | | | 102T | | | 103T | |
| | triblock/diblock (mass ratio) | | 100/0 | 60/40 | 100/0 | 100/0 | | | 100/0 | | | 100/0 | |
| | Mw ($\times 10^4$) | | 6 | 5 | 6.5 | 7 | | | 10 | | | 10 | |
| | Styrene content (% by mass) | | 23 | 23 | 23 | 30 | | | 15 | | | 30 | |
| Storage modulus G' (Pa) | 10Hz | 23°C A ($\times 10^5$) | 3.6 | 4.1 | 3.7 | 3.9 | 3.5 | 3.5 | 3.7 | 4.3 | 2.8 | 3.9 | 4.1 |
| | | 70°C B ($\times 10^5$) | 3.5 | 3.6 | 3.6 | 3.6 | 3.4 | 3.4 | 3.5 | 3.8 | 2.4 | 3.7 | 3.7 |
| | | A/B | 1.0 | 1.1 | 1.0 | 1.1 | 1.0 | 1.0 | 1.1 | 1.2 | 1.2 | 1.1 | 1.1 |
| Adhesive strength to SUS430BA (N/25mm) | 23°C | 0.3m/min | 7.5 | 7.4 | 7.3 | 7.3 | 7.2 | 6.9 | 6.9 | 6.5 | 8.0 | 6.7 | 6.9 |
| | | 30m/min X | 5.5 | 5.4 | 5.4 | 5.6 | 5.4 | 4.8 | 4.0 | 4.0 | 5.2 | 4.8 | 4.0 |
| | 70°C | 0.3m/min | 7.2 | 7.3 | 7.0 | 7.4 | 7.0 | 6.8 | 6.6 | 6.6 | 7.3 | 6.8 | 6.6 |
| | | 30m/min Y | 5.6 | 5.3 | 5.2 | 5.2 | 4.4 | 4.8 | 4.8 | 4.6 | 5.6 | 5.2 | 5.2 |
| | | X/Y | 0.98 | 1.02 | 1.04 | 1.08 | 1.23 | 1.00 | 0.83 | 0.87 | 0.93 | 0.92 | 0.77 |
| Adhesive transfer resistance | | Grade | E | E | E | E | G | E | E | E | E | E | E |
| Miscibility | | Grade | G | G | G | G | G | G | G | G | G | G | G |

[Table 2]

Table 2

| PSA composition (parts by mass) | | | Ex. 12 | Ex. 13 | Ex. 14 | Ex. 15 | Ex. 16 |
|---|---|---|---|---|---|---|---|
| | Base polymer | | Polyisobutylene B-80 | Polyisobutylene B-80 | Polyisobutylene B-80 | St/IB block copolymer 062M | St/IB block copolymer 102T |
| | Additional polymer | | Non-crystalline PP TAFTHREN H5002 | SEBS DYNARON 8600P | - | - | - |
| | Base polymer/Additional polymer (parts by mass) | | 100/20 | 100/20 | 100/0 | 100/0 | 100/0 |
| Storage modulus G' (Pa) | 10Hz | 23°C A ($\times 10^5$) | 4.2 | 4.1 | 3.4 | 6.8 | 5.1 |
| | | 70°C B ($\times 10^5$) | 4.3 | 3.5 | 3.3 | 3.1 | 4.1 |
| | A/B | | 1.0 | 1.2 | 1.0 | 2.2 | 1.3 |
| Adhesive strength to SUS430BA (N/25mm) | 23°C | 0.3m/min | 5.5 | 4.1 | 7.3 | 8.3 | 6.0 |
| | | 30m/min X | 2.2 | 6.3 | 5.7 | 4.5 | 2.7 |
| | 70°C | 0.3m/min | 9.1 | 5.8 | 7.3 | 9.0 | 9.0 |
| | | 30m/min Y | 2.8 | 9.6 | 5.6 | 9.2 | 7.8 |
| | X/Y | | 0.79 | 0.66 | 1.02 | 0.49 | 0.35 |
| Adhesive transfer resistance | Grade | | E | E | P | E | E |
| Miscibility | Grade | | P | P | - | - | - |

EP 2 641 951 B1

As shown in Tables 1 and 2, with respect to the PSA sheet samples according to Examples 1 to 11 each comprising a PSA that comprises a polyisobutylene as the base polymer and further comprises a St/IB block copolymer in an amount of 70 parts or smaller (more specifically, 5 parts to 50 parts) relative to 100 parts of the polyisobutylene, the adhesive transfer resistance was clearly increased when compared to the sample (Example 14) containing no St/IB block copolymer. Each of Examples 1 to 11 also exhibited good miscibility and had as good an appearance as that of Example 14, which contained no additional polymer. Each of the samples according to Examples 1 to 12 was found to exhibit an adhesive strength (180° peel strength) appropriate as a surface protection sheet

With respect to Example 12 using a non-crystalline polypropylene in place of a St/IB block copolymer as a polymer added to the polyisobutylene, while the adhesive transfer resistance increased somewhat, the adhesive strength at a peeling speed of 30 m/min decreased, thereby degrading the performance as a protection sheet. In addition, because the polyisobutylene and the non-crystalline polypropylene were poorly miscible to each other, the PSA layer appeared turbid. With respect to Example 13 using a SEBS in place of a St/IB block copolymer, while the adhesive transfer resistance increased, the adhesive strength at a peeling speed of 30 m/min increased significantly upon storage at 70 °C for 48 hours. In addition, the adhesive strength at a peeling speed of 30 m/min was largely dependent on the thermal history, and also there were some problems in the stability of the adhesive strength and the workability during peeling procedures. Furthermore, because the polyisobutylene and the SEBS were poorly miscible to each other, the PSA layer appeared turbid. With Examples 15 and 16 each using a St/IB block copolymer as the base polymer, upon storage at 70 °C for 48 hours, the adhesive strength at a peeling speed of 30 m/min increased greatly (to a level twice or more as high as that after storage at 23 °C), and with Example 16, upon storage at 23 °C for 48 hours, the adhesive strength at a peeling speed of 30 m/min turned out lower. As such, both examples lacked a balance of various properties expected for protection sheets.

Although specific embodiments of the present invention have been described in detail above, these are merely for illustrations and do not limit the scope of the claims. The art according to the claims includes various modifications and changes made to the specific embodiments illustrated above.

INDUSTRIAL APPLICABILITY

The surface protection sheet according to the present invention is preferable when used in an embodiment where it is adhered to an adherend (an article to be protected) to serve a role to protect the surface of the adherend from damages and removed from the adherend after completed the protective role, with examples of the adherend including metal plates (steel plates, stainless steel plates, aluminum plates, etc.), painted metal plates having paint films on the surfaces (e.g., painted steel plates used for house building materials, other building materials, etc.), synthetic resin plates, articles molded from these, and so on.

**Claims**

1.   A surface protection sheet comprising a substrate and a layer of a pressure-sensitive adhesive provided thereon, wherein the pressure-sensitive adhesive comprises:

    an isobutylene homopolymer or a copolymer, wherein isobutylene is copolymerized at a ratio larger than 50 mol%, as a base polymer,
    with a weight average molecular weight in a range from $10 \times 10^4$ to $150 \times 10^4$; and
    a styrene/isobutylene block copolymer, and
    the amount of the styrene/isobutylene block copolymer in the pressure-sensitive adhesive is larger than 0 part by mass, but smaller than or equal to 70 parts by mass relative to 100 parts by mass of the polyisobutylene.

2.   The surface protection sheet according to claim 1, wherein the styrene/isobutylene block copolymer primarily comprises a triblock copolymer having a structure of styrene block-isobutylene block-styrene block.

3.   The surface protection sheet according to claim 1 or 2, wherein the pressure sensitive adhesive exhibits a room temperature storage modulus A when measured at a frequency of 10 Hz and a temperature of 23°C, and a high temperature storage modulus B when measured at a frequency of 10 Hz and a temperature of 23°C, with the storage moduli A and B satisfying the next inequality:

$$A/B < 1.3.$$

4. The surface protection sheet according to any of claims 1 to 3, wherein the pressure-sensitive adhesive exhibits a room temperature storage modulus A of 4.5 x 105 Pa or lower when measured at a frequency of 10 Hz and a temperature of 23°C.

5. The surface protection sheet according to any of claims 1 to 4, wherein the styrene/isobutylene block copolymer has a weight average molecular weight in a range from $3 \times 10^4$ to $20 \times 10^4$.

6. Use of the sheet according to any of claims 1 to 5 as a surface protection sheet.

**Patentansprüche**

1. Oberflächenschutzfolie umfassend ein Substrat und eine darauf bereitgestellte Schicht aus einem Haftklebstoff, worin der Haftklebstoff umfasst:

ein Isobutylen-Homopolymer oder ein Copolymer, worin Isobutylen in einem Verhältnis von mehr als 50 mol% copolymerisiert ist, als ein Grundpolymer, mit einem Gewichtsmittel des Molekulargewichts in einem Bereich von $10 \times 10^4$ bis $150 \times 10^4$; und ein Styrol/Isobutylen-Blockcopolymer, und die Menge des Styrol/Isobutylen-Blockcopolymers in dem Haftklebstoff ist größer als 0 Massenteile, aber kleiner als oder gleich 70 Massenteile, bezogen auf 100 Massenteile des Polyisobutylens.

2. Oberflächenschutzfolie gemäß Anspruch 1, worin das Styrol/Isobutylen-Blockcopolymer hauptsächlich ein Triblockcopolymer mit einer Struktur von Styrolblock-Isobutylenblock-Styrolblock umfasst.

3. Oberflächenschutzfolie gemäß Anspruch 1 oder 2, worin der Haftklebstoff einen Raumtemperatur-Speichermodul A, wenn bei einer Frequenz von 10 Hz und einer Temperatur von 23 °C gemessen wird, und einen Hochtemperatur-Speichermodul B, wenn bei einer Frequenz von 10 Hz und einer Temperatur von 23 °C gemessen wird, aufweist, wobei die Speichermoduli A und B die folgende Ungleichung erfüllen:

$$A/B < 1{,}3.$$

4. Oberflächenschutzfolie gemäß einem der Ansprüche 1 bis 3, worin der Haftklebstoff einen Raumtemperatur-Speichermodul A von $4{,}5 \times 10^5$ Pa oder weniger aufweist, wenn bei einer Frequenz von 10 Hz und einer Temperatur von 23 °C gemessen wird.

5. Oberflächenschutzfolie gemäß einem der Ansprüche 1 bis 4, worin das Styrol/Isobutylen-Blockcopolymer ein Gewichtsmittel des Molekulargewichts in einem Bereich von $3 \times 10^4$ bis $20 \times 10^4$ aufweist.

6. Verwendung der Folie gemäß einem der Ansprüche 1 bis 5 als eine Oberflächenschutzfolie.

**Revendications**

1. Feuille de protection de surface comprenant un substrat et une couche d'un adhésif sensible à la pression prévu dessus,
dans laquelle l'adhésif sensible à la pression comprend :

un homopolymère ou un copolymère d'isobutylène, l'isobutylène étant copolymérisé sous un rapport supérieur à 50 % en mole, comme polymère de base, avec un poids moléculaire moyen en poids situé dans une plage de $10 \times 10^4$ à $150 \times 10^4$ ; et un copolymère séquencé de styrène/isobutylène, et la quantité du copolymère séquence de styrène/isobutylène dans l'adhésif sensible à la pression étant supérieure à 0 partie en masse, mais inférieure ou égale à 70 parties en masse par rapport à 100 parties en masse du polyisobutylène.

**2.** Feuille de protection de surface selon la revendication 1, dans laquelle le copolymère séquencé de styrène/isobutylène comprend principalement un copolymère triséquencé ayant une structure de séquence styrène-séquence isobutylène-séquence styrène.

**3.** Feuille de protection de surface selon la revendication 1 ou 2, dans laquelle l'adhésif sensible à la pression fait preuve d'un module d'élasticité en cisaillement au stockage à la température ambiante A lorsque mesuré à une fréquence de 10 Hz et une température de 23°C, et d'un module d'élasticité en cisaillement au stockage sous haute température B lorsque mesuré à une fréquence de 10 Hz et une température de 23°C, avec les modules d'élasticité en cisaillement au stockage A et B satisfaisant l'inégalité suivante :

$$A/B < 1,3.$$

**4.** Feuille de protection de surface selon l'une quelconque des revendications 1 à 3, dans laquelle l'adhésif sensible à la pression fait preuve d'un module d'élasticité en cisaillement au stockage à la température ambiante A de 4,5 x $10^5$ Pa ou moins lorsque mesuré à une fréquence de 10 Hz et une température de 23°C.

**5.** Feuille de protection de surface selon l'une quelconque des revendications 1 à 4, dans laquelle le copolymère séquencé de styrène/isobutylène présente un poids moléculaire moyen en poids situé dans une plage de $3 \times 10^4$ à 20 $10^4$.

**6.** Utilisation de la feuille selon l'une quelconque des revendications 1 à 5 comme feuille de protection de surface.

[Fig. 1]

**EP 2 641 951 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012062193 A
- JP 2832565 B
- JP 2007238746 A
- JP 3887402 B
- JP 3471122 B
- JP 3878700 B